# EUROPEAN PATENT APPLICATION

(11) **EP 4 575 602 A1**
(43) Date of publication of application: **25.06.2025**
(21) Application number: 22955686.5
(22) Date of filing: 17.08.2022
(51) Int. Cl.: G02B 6/44, G01D 5/26, G02B 6/00

(54) **OPTICAL-FIBER MEASUREMENT CABLE FOR RADIATION ENVIRONMENT**

(71) Applicant: Neubrex Co., Ltd., Kobe-shi, Hyogo 650-0023 (JP); Agence Nationale pour la Gestion des Déchets Radioactifs, 92298 Châtenay-Malabry Cedex (FR)
(72) Inventor: KISHIDA, Kinzo, Kobe-shi, Hyogo 650-0023 (JP); BERTRAND, Johan, 92298 Chatenay-Malabry Cedex (FR)
(74) Representative: Meissner Bolte Partnerschaft mbB
(86) International application number: PCT/JP2022/031033
(87) International publication number: WO 2024/038512

(57) **Abstract**

An optical fiber measurement cable (10) for radiation environment, which has high-temperature resistance, burning resistance, and radiation resistance, includes: a base material (1) made of PEEK and having an embossed surface; and an optical cable (4) provided at a center part inside the base material (1), and is formed in a tape shape as a whole. The optical cable (4) has therein an optical fiber (2) for measurement, and a surface of the optical cable (4) is coated with an inorganic-organic hybrid polymer film (3).

## Description

### TECHNICAL FIELD

The present invention relates to an optical fiber measurement cable for radiation environment.

### BACKGROUND ART

Technology involving nuclear power generation is one of technologies expected to be increasingly developed under the circumstances of a social demand that emphasizes green energy. While this technology is superior in environmental adaptability, cost, and application reliability, the main problem is its safety. Regarding the theme of the safety, constant monitoring for a nuclear power generation system in terms of safety by DFOS is expected to provide the way to solve the problem.

Regarding safe storage of characteristic nuclear waste, the policy has been changed from "deposit" to "reposit". In repositing, an optical fiber is exposed to radiation for a long period and therefore is required to have radiation resistance as well as high-temperature resistance and burning resistance.

In a case of using an optical fiber in a nuclear power generation facility, it is necessary to select a cable material suitable for use in the radiation environment. One example of consideration for such a cable material is consideration for a polyether ether ketone (PEEK) cable used for a J-PARC 3-GeV rapid cycling synchrotron (RCS) vacuum device, conducted by Japan Atomic Energy Agency.

A cable material suitable for use in the radiation environment as described above is required to satisfy a non-halogen property, radiation resistance, and high burning resistance. In the above consideration example, for further satisfying normal mechanical property requirements, PEEK resin having a comparatively great elongation factor was selected as an insulating material.

In addition, in order to verify radiation resistance, a gamma-ray irradiation test was conducted on three test items, i.e., an irradiation property test, an electric property test, and a fire spreading resistance test, and thus radiation resistance of 10 MGy (property of not being deteriorated with radiation of up to 10 MGy) was confirmed. Therefore, the PEEK cable can be expected to operate stably under the 3-GeV RCS radiation environment (see, for example, Non-Patent Document 1).

As described above, although being high in cost, the PEEK cable is a major candidate for satisfying requirements of a non-halogen base, high burning resistance, radiation resistance of at least 10 MGy, and a normal mechanical property, which are needed for cable insulation.

### LIST OF CITATIONS

### NON-PATENT DOCUMENTS

Non-Patent Document 1: MIO, et al, "Development of Radiation Resistant PEEK Insulation Cable", JAEA-Technology, 2009-018, April 2009
Non-Patent Document 2: Catalog of Neubrex Co., Ltd., "FN-SILL-3, Embossed Sensing Cable", Rev. 5.0, April 2017, [online],
   Internet <URL: https://www.neubrex.com/htm/products/pro-fiber_7.htm>
Non-Patent Document 3: Kay Schuster et al., "Innovative fiber coating systems based on organic modified ceramics", Proc. of SPIE, Vol. 7598, 75981H1-75981H8, 2010

### PATENT DOCUMENT

Patent Document 1: Japanese Patent Application Laid-Open Publication JP 2010 - 216 877 A

### SUMMARY OF THE INVENTION

### PROBLEMS TO BE SOLVED BY THE INVENTION

Also in FO sensing under the radiation environment, considering reports of various severe tests which are referable, the above PEEK material can be selected as a base material for mounting an optical fiber as an optical fiber measurement cable, in view of the above circumstances.

However, there have been no optical fiber cables that satisfy high-temperature resistance, burning resistance, and radiation resistance at a product level. Although there has been a usage record of the above PEEK material for electric wires (usage as an electric cable coat material of European Organization for Nuclear Research (CERN) which is high in radiation adaptability has been reported), there have been no practical examples in which an optical fiber for measuring strain and temperature at the same time is mounted to the above PEEK material.

The present invention has been made to solve the above problem, and an object of the present invention is to provide a new optical fiber cable that satisfies high-temperature resistance, burning resistance, and radiation resistance and is usable under the radiation environment.

### SOLUTION TO THE PROBLEMS

An optical fiber measurement cable for radiation environment according to the present invention has a base material which is made of PEEK and inside which an optical cable is provided, the base material being formed in a tape shape. The optical cable has therein an optical fiber for measurement and has a surface coated with an inorganic-organic hybrid polymer film.

### EFFECT OF THE INVENTION

The optical fiber measurement cable for radiation environment according to the present invention makes it possible to provide a new optical fiber cable that satisfies high-temperature resistance, burning resistance, and radiation resistance and is usable under the radiation environment.

### BRIEF DESCRIPTION OF THE DRAWINGS

FIG. 1 illustrates the outline of an optical fiber measurement cable for radiation environment according to Embodiment 1.
FIG. 2 shows an example of a result of an influence on frequency shift due to an extrusion forming process for the optical fiber measurement cable for radiation environment according to Embodiment 1.
FIG. 3 shows an example of loss in a case where pre-tension is added to the optical fiber measurement cable for radiation environment according to Embodiment 1 during the extrusion forming process for the cable.
FIG. 4 shows an example of a result of examining reproducibility of Brillouin frequency shift with respect to temperature change in the optical fiber measurement cable for radiation environment according to Embodiment 1.
FIG. 5 shows a result of examining changes in sensitivity coefficients of frequency shifts with respect to temperature change in the optical fiber measurement cable for radiation environment according to Embodiment 1.
FIG. 6 shows a result of examining changes in sensitivity coefficients of frequency shifts with respect to strain change in the optical fiber measurement cable for radiation environment according to Embodiment 1.
FIG. 7 illustrates the outline of an optical fiber measurement cable for radiation environment according to Embodiment 2.

### DESCRIPTION OF EMBODIMENTS

### Embodiment 1

Hereinafter, an optical fiber measurement cable 10 for radiation environment according to Embodiment 1 of the present invention will be described with reference to the drawings.

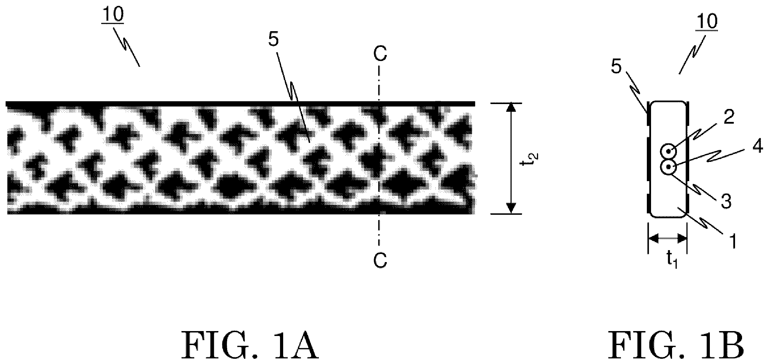

The optical fiber measurement cable 10 for radiation environment according to the present invention has a structure as shown in FIG. 1A and FIG. 1B. FIG. 1A is a view of the optical fiber measurement cable for radiation environment as seen from the top surface and schematically shows the surface condition. FIG. 1B is a schematic view of a cross-section along line C-C in FIG. 1A.

As shown in FIG. 1A, the optical fiber measurement cable 10 for radiation environment according to Embodiment 1 is formed in a tape shape as a whole and extends in the left-right direction in FIG. 1A, which is the axial direction of this optical fiber measurement cable. That is, a cable thickness t1 shown in FIG. 1B is not greater than a fraction of a cable width t2 shown in the vertical direction in FIG. 1A. At the center axis position (a center part of a cross-section perpendicular to the axis in a base material) in this cable, a two-core optical cable is provided as shown in FIG. 1B.

Next, with reference to FIG. 1B, the internal structure of the optical fiber measurement cable 10 for radiation environment according to Embodiment 1 will be described.

As shown in FIG. 1B, as a base material 1, a PEEK material which is a material satisfying high-temperature resistance, burning resistance, and radiation resistance, is used. The reason why the PEEK material is used as the base material 1 is that it has been reported that the PEEK material is used as an electric cable coat material of European Organization for Nuclear Research (CERN) which is high in radiation adaptability, and thus is considered to be a material suitable for the radiation environment. In addition, it is known that the PEEK material is sufficiently high in a mechanical strength which is a basic property of a cable even under the radiation environment (see Non-Patent Document 1).

At the center part, a two-core optical cable 4 is provided which has radiation-resistant FO optical fibers 2 at the center axis with the outer periphery (surface) coated with an inorganic-organic hybrid polymer film 3 (polymer film 3 formed by a hybrid of an inorganic material and an organic material). Here, as the optical fibers 2, either a single-mode optical fiber or a multimode optical fiber is used depending on the intended application.

It is also possible to use distributed temperature sensing (DTS) and distributed temperature sensing system (DTSS) by forming multimode FO by the same cable. The case where the optical cable 4 has a two-core configuration for the purpose of high-performance measurement application is described as a representative example, but without limitation thereto, the optical cable 4 may be configured with another number of cores (e.g., one core or three cores).

One of the greatest features of the inorganic-organic hybrid polymer film 3 is that the inorganic-organic hybrid polymer film 3 is stable even under a temperature higher than 300 °C. As sensor application, there has been a report in which application to a fiber Bragg grating (FBG) sensor was considered (see, for example, Non-Patent Document 3), but there have been no reports in which application to a measurement sensor for radiation environment was considered. As a more specific example of the inorganic-organic hybrid polymer film 3, there is a polymer film forming a glass-state silicate network.

In development according to the present invention, as a premise, a measurement method capable of distributed measurement is used for a measurement sensor for radiation environment. Therefore, in principle, the example in which application to a FBG sensor using a point-based measurement method was reported (for example, Non-Patent Document 3 described above) cannot be applied directly (as it is) to development according to the present invention. That is, in the present invention, development of a cable used for measurement based on Rayleigh scattering or Brillouin scattering (hereinafter, simply referred to as Rayleigh measurement or Brillouin measurement) which is a measurement method capable of distributed measurement is assumed as a premise.

In this optical fiber measurement cable, since the mechanical strength of the PEEK material as the base material described above is sufficiently high, a tension member is not used. In view of manufacturing of the PEEK material, for the outer periphery of the optical cable 4, a standard coat material is not used but the inorganic-organic hybrid polymer film 3 is used as a coat material.

That is, in order to use the PEEK material as the base material of this optical fiber measurement cable, manufacturing is performed by an extrusion forming method. At this time, the extrusion temperature reaches a high temperature of 370 °C. There is a problem that a standard FO coating material evaporates at the extrusion temperature of 370 °C, and thus it has been found out that a standard FO coating material cannot be used. Therefore, in this optical fiber measurement cable, the inorganic-organic hybrid polymer film 3 is used as a coat material.

Here, the tension member is normally used for reinforcing the cable strength.

Further, for a reason of cable installation, the surface of this optical fiber measurement cable has an embossed structure 5 as shown in FIG. 1A, so as to be less slippery. This facilitates installation as compared to a case of not having an embossed structure (regarding embossed structure, see, for example, Non-Patent Document 2).

As described above, in this optical fiber measurement cable, an optical cable having therein an optical fiber for measurement with its outer peripheral surface coated with a film formed by a hybrid of an inorganic material and an organic polymer so as to have high-temperature resistance and radiation resistance is used as a sensor, a PEEK material which is a material satisfying high-temperature resistance, burning resistance, and radiation resistance is employed as a base material, and the surface thereof is formed to have an embossed structure. Thus, this optical fiber measurement cable has been developed as a new optical fiber cable for measurement that satisfies all of high-temperature resistance, burning resistance, and radiation resistance and that can be easily installed.

In addition, according to a result of a test for the mechanical strength of this optical fiber measurement cable, favorable performance was obtained in a range up to 1.5 times a required deformation range.

Next, a result of examining performance as a sensor using this optical fiber measurement cable will be described below.

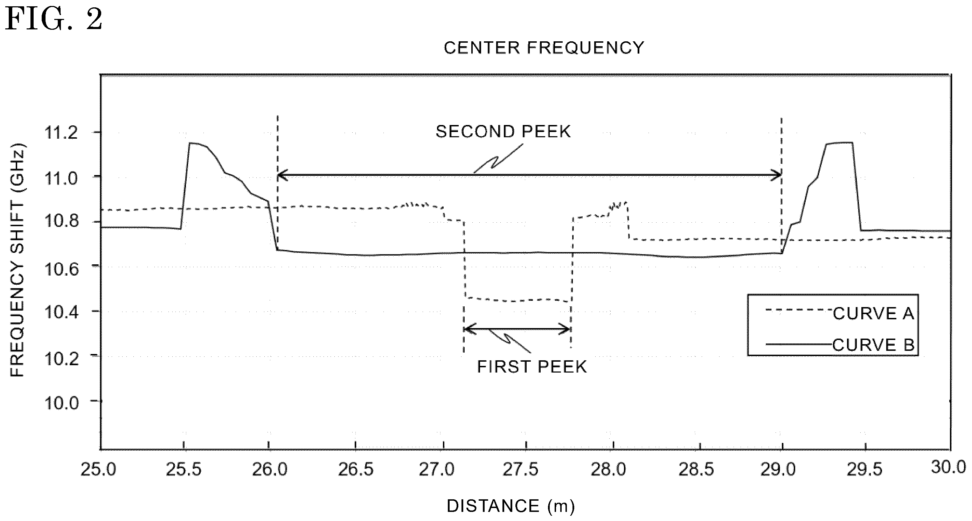

First, the influence of using the PEEK material was examined. Hereinafter, a result thereof will be described with reference to FIG. 2. This is because, in the case of using the PEEK material, an extrusion forming process is used for manufacturing this optical fiber measurement cable.

FIG. 2 shows a result of examining the influence of the extrusion forming process. A center frequency of Rayleigh frequency shift in Rayleigh measurement, measured before the extrusion forming process, was 11.16 GHz, whereas the center frequency measured after the extrusion forming process was 10.40 GHz (see "first PEEK" in a graph of curve A shown by a dotted line in FIG. 2).

At the parts other than the "first PEEK" (center part), i.e., the curve parts on both sides of the center part, a measurement result for a cable connected to the PEEK material and made of a material other than the PEEK material is shown for reference. This indicates that compressive strain of 1.6 % (16033 µε) occurred in the embossed part of this optical fiber measurement cable. A cause for this great strain is considered to be thermal deformation in annealing performed on this optical fiber measurement cable from 370 °C to the room temperature.

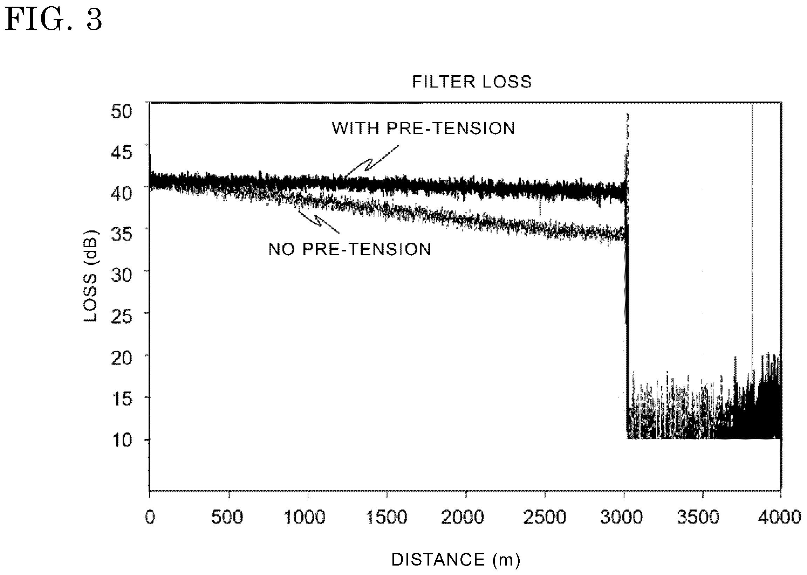

In order to reduce the compressive strain considered due to thermal deformation in annealing, pre-tension as shown in FIG. 3 is added to this optical fiber measurement cable during the extrusion forming process for this optical fiber measurement cable.

In FIG. 3, data on the upper side indicates a result in a case of adding pre-tension to this optical fiber measurement cable during the extrusion forming process for this optical fiber measurement cable. On the other hand, data on the lower side indicates a result in a case of not adding pre-tension to this optical fiber measurement cable during the extrusion forming process for this optical fiber measurement cable.

In FIG. 3, the horizontal axis indicates a distance (unit: m) in the axial direction of this optical fiber measurement cable, and the vertical axis indicates loss (unit: dB) after passage through a filter.

From the data shown in FIG. 3, it is found that loss is smaller in the case of adding pre-tension during the extrusion forming process than in the case of not adding pre-tension (in FIG. 3, approximately 5 dB at a distance of 3 km).

In view of the above result, a result of measuring the center frequency using the optical fiber measurement cable for which pre-tension was added during the extrusion forming process is shown by curve B in FIG. 2 (see "second PEEK" in a graph of curve B shown by a solid line in FIG. 2).

Comparing the "first PEEK" and the "second PEEK", it is found that the center frequency thereof is improved by at least approximately 0.2 GHz. That is, it is found that compressive strain caused during the extrusion forming process can be reduced by the optical fiber measurement cable with pre-tension added.

From the above consideration result, it has been found that this developed optical fiber measurement cable can be used while satisfying basic performance as an optical fiber measurement cable for radiation environment. Next, a result of examining sensing performance of this developed optical fiber measurement cable will be described below with reference to the drawings.

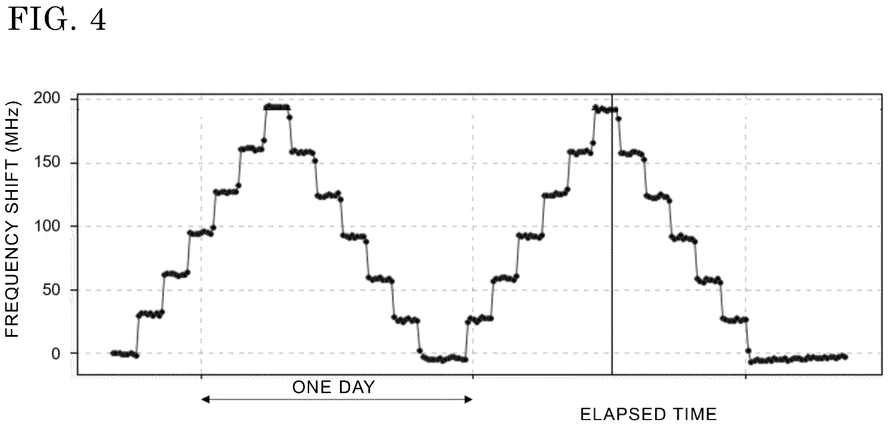

FIG. 4 shows an example of a result of examining reproducibility of Brillouin frequency shift in Brillouin measurement with respect to temperature change in this optical fiber measurement cable. From a graph shown in FIG. 4, it has been found that there is sufficient reproducibility of frequency shift measured while the temperature was raised/lowered in a range of 20 °C to 80 °C, and thus this optical fiber measurement cable is excellent in reproducibility.

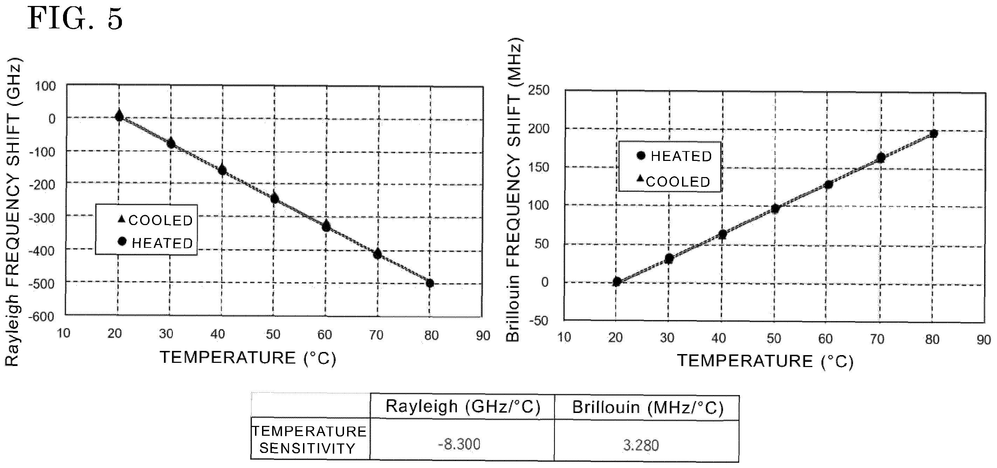

In view of the above result, changes in sensitivity coefficients of Brillouin frequency shift and Rayleigh frequency shift with respect to temperature change in this optical fiber measurement cable (whether or not a sensitivity coefficient of temperature sensitivity exhibits a constant value) were examined. A result thereof is shown in FIG. 5.

A graph on the left side shows a result of examining change in Rayleigh frequency shift with respect to temperature change, and a graph on the right side shows a result of examining change in Brillouin frequency shift with respect to temperature change. In these graphs, black triangle symbols indicate values of frequency shift in a case of cooling, and black circle symbols indicate values of frequency shift in a case of heating.

From the result shown in FIG. 5, it is found that the case of raising the temperature (line connecting black circles) and the case of lowering the temperature (line connecting black triangles) are represented by straight lines almost overlapping each other. Accordingly, it is found that the sensitivity coefficients for temperature of Brillouin frequency shift and Rayleigh frequency shift do not change between the case of raising the temperature and the case of lowering the temperature and each exhibit almost the same value.

On the basis of the above result, the sensitivity coefficients for temperature were obtained as -8.300 GHz/°C for the Rayleigh measurement method and 3.280 MHz/°C for the Brillouin measurement method, as shown in a table on the lower side of the graphs.

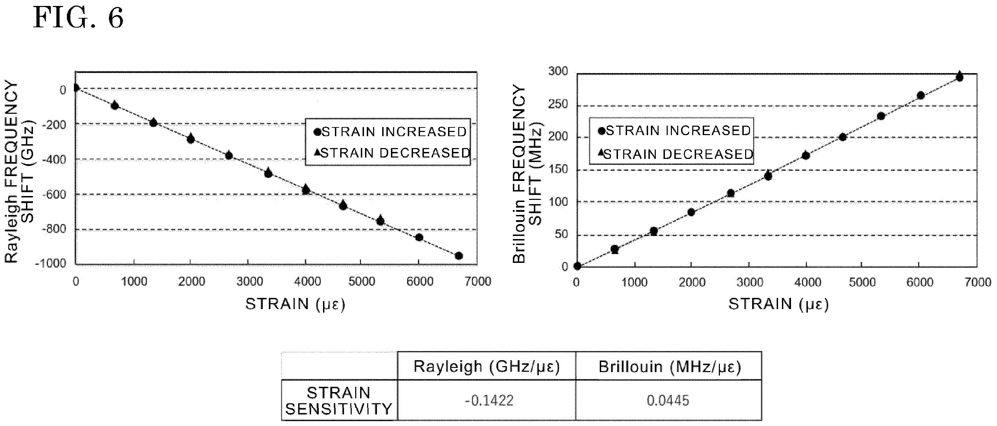

Next, sensitivity coefficients of Brillouin frequency shift and Rayleigh frequency shift with respect to strain change in this optical fiber measurement cable were examined in the same manner as described above, and a result thereof is shown in FIG. 6. A graph on the left side shows a result of examining change in Rayleigh frequency shift with respect to strain change, and a graph on the right side shows a result of examining change in Brillouin frequency shift with respect to strain change. In these graphs, black triangle symbols indicate values of frequency shift in a case of decreasing strain, and black circle symbols indicate values of frequency shift in a case of increasing strain.

From the result shown in FIG. 6, it is found that the case of increasing strain (line connecting black circles) and the case of decreasing strain (line connecting black triangles) are represented by straight lines almost overlapping each other. Accordingly, it is found that the sensitivity coefficients for strain of Brillouin frequency shift and Rayleigh frequency shift do not change between the case of increasing strain and the case of decreasing strain and each exhibit almost the same value.

On the basis of the above result, the sensitivity coefficient for strain was obtained as -0.1422 GHz/µε for the Rayleigh measurement method and 0.0445 MHz/µε for the Brillouin measurement method, as shown in a table on the lower side of the graphs.

From the above, it has been found that this developed optical fiber measurement cable has a basic sensing function. That is, it can be said that this developed optical fiber measurement cable is a new optical fiber cable that satisfies high-temperature resistance, burning resistance, and radiation resistance and can be used under the radiation environment.

For the relationship between temperature change/strain change and Brillouin frequency shift/Rayleigh frequency shift, the principle of measurement, and the like, see Patent Document 1, etc.

### Embodiment 2

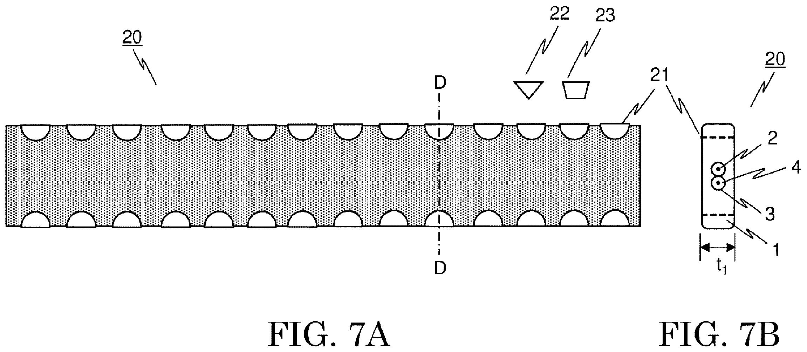

Hereinafter, an optical fiber measurement cable 20 for radiation environment according to Embodiment 2 of the present invention will be described with reference to FIG. 7A and FIG. 7B.

The optical fiber measurement cable 20 for radiation environment according to Embodiment 2 has a structure as shown in FIG. 7A and FIG. 7B. FIG. 7A is a view of the optical fiber measurement cable for radiation environment as seen from the top surface and schematically shows the surface condition. FIG. 7B is a schematic view of a cross-section along line D-D in FIG. 7A.

As shown in FIG. 7A, the optical fiber measurement cable 20 for radiation environment according to Embodiment 2 is formed in a tape shape as a whole and extends in the left-right direction (also referred to as longitudinal direction) in FIG. 7A, which is the axial direction of this optical fiber measurement cable, and this is the same as in the optical fiber measurement cable 10 for radiation environment according to Embodiment 1. Meanwhile, the optical fiber measurement cable 20 for radiation environment according to Embodiment 2 has a feature that a plurality of slots 21 for mechanic installation (hereinafter, referred to as mechanic install slots 21) which are used for fixing this cable at the time of installation on a site are provided along the upper and lower outer edges (upper and lower ends) (see FIG. 7A).

The shape of the mechanic install slot 21 is typically a semicircular shape as shown in FIG. 7A. As a shape other than a semicircular shape, a mechanic install slot 22 having a triangular shape or a mechanic install slot 23 having a trapezoidal shape may be used.

The features other than the above are the same as in Embodiment 1 and therefore the detailed description thereof is omitted here. In addition, as shown in FIG. 7B which shows a cross-section along line D-D in FIG. 7A, the internal structure of the optical fiber measurement cable 20 for radiation environment according to Embodiment 2 is also the same as in Embodiment 1 and therefore the detailed description thereof is omitted here.

As a property of an optical fiber measurement cable for radiation environment used in a nuclear environment or the like, performance such as measurement accuracy is required to be stable over a long period. Therefore, also for fixation of this cable, it is considered that a fixation method (mechanic installation method) for ensuring a long-term stability is required, and in order to achieve this, the optical fiber measurement cable 20 for radiation environment provided with mechanic install slots as described above is more useful than the optical fiber measurement cable for radiation environment according to Embodiment 1.

Although the invention is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention. For example, at least one of the constituent components may be modified, added, or eliminated. At least one of the constituent components mentioned in at least one of the preferred embodiments may be selected and combined with the constituent components mentioned in another preferred embodiment.

### LIST OF REFERENCE SIGNS

- 1: base material
- 2: optical fiber
- 3: inorganic-organic hybrid polymer film
- 4: optical cable
- 5: embossed structure
- 10: optical fiber measurement cable for radiation environment
- 20: optical fiber measurement cable for radiation environment (with mechanic install slots)
- 21: mechanic install slot (semicircular shape)
- 22: mechanic install slot (triangular shape)
- 23: mechanic install slot (trapezoidal shape)

## Claims

1. An optical fiber measurement cable for radiation environment, having a base material which is made of PEEK and inside which an optical cable is provided, the base material being formed in a tape shape,
wherein the optical cable has therein an optical fiber for measurement and has a surface coated with an inorganic-organic hybrid polymer film.

2. The optical fiber measurement cable for radiation environment according to claim 1,
wherein the base material has an embossed surface.

3. The optical fiber measurement cable for radiation environment according to claim 1 or 2,
wherein the base material has a plurality of mechanic install slots arranged along an outer edge in a longitudinal direction.

4. The optical fiber measurement cable for radiation environment according to any one of claims 1 to 3,
wherein the optical fiber is a single-mode optical fiber.

5. The optical fiber measurement cable for radiation environment according to any one of claims 1 to 3,
wherein the optical fiber is a multimode optical fiber.

6. The optical fiber measurement cable for radiation environment according to any one of claims 1 to 3,
wherein a tension member is not provided.

7. The optical fiber measurement cable for radiation environment according to any one of claims 1 to 6,
wherein the optical cable is provided at a center part of a cross-section perpendicular to an axis in the base material.
